# EUROPÄISCHE PATENTANMELDUNG

(11) **EP 1 201 982 A2**
(43) Veröffentlichungstag der Anmeldung: **02.05.2002**
(21) Anmeldenummer: 01250382.7
(22) Anmeldetag: 30.10.2001
(51) Int. Cl.: F16L 13/14

(54) **Rohrverbindung**

(30) Priorität: 30.10.2000 DE 10054367
(71) Anmelder: Mapress GmbH & Co. KG, 40764 Langenfeld (DE)
(72) Erfinder: Franzen, Rainer, Dr.-Ing., 47802 Krefeld (DE); Foering, Herbert, 42697 Solingen (DE)
(74) Vertreter: Meissner, Peter E., Dipl.-Ing.

(57) **Zusammenfassung**

Die Erfindung betrifft eine Rohrverbindung, bestehend aus einem Pressfitting (1), der mindestens einen im Querschnitt wulstartig ausgebildeten, einen Dichtring (3) aufnehmenden Abschnitt (2) und einen daran anschließenden, der Einschubseite zugewandten und/oder der Einschubseite abgewandten, zylindrisch ausgebildeten Abschnitt (6.1) aufweist, wobei der der Einschubseite abgewandte zylindrisch ausgebildete Abschnitt (6.1) einen Anschlag bildend in einen daran anschließenden zylindrisch ausgebildeten Abschnitt (9) übergeht, dessen Innendurchmesser (10) kleiner ist als die anderen zylindrisch ausgebildeten Abschnitte und einem Leitungsrohr (4), dessen glatt ausgebildeter Endbereich nach dem Einschub in den Pressfitting am inneren Anschlag des Pressfittings zur Anlage kommt und mittels eines den Pressfitting umfassenden mindestens zwei Pressbacken (16) aufweisenden Presswerkzeuges nach dem Schließen eine unlösbare dichte Rohrverbindung gebildet wird, wobei während des Verpressens die Pressbacken sowohl auf die Ringwulst (2) einschl. des darin eingelegten Dichtringes (3) als auch auf den der Einschubseite zugewandten (6.1) und/oder abgewandten zylindrisch ausgebildeten Abschnitt (9) des Pressfittings einwirken, wobei im Einschubbereich des Pressfittings das Leitungsrohr ein weitgehend die axiale Rückbewegung des eingeschobenen Leitungsrohres verhinderndes Mittel angeordnet ist, dessen lichte Weite im nichtbelasteten Zustand kleiner ist als der toleranzmäßig kleinste sich ergebende Druchmesser (11) des eingeschobenen Leitungsrohres.

Erfindungsgemäß ist das Mittel im Einwirkbereich der Pressbacke (16) angeordnet.

## Beschreibung

Die Erfindung betrifft eine Rohrverbindung bestehend aus einem Pressfitting und einem darin einschiebbaren Leitungsrohr gemäß dem Oberbegriff des Patentanspruches 1.

Eine Rohrverbindung mit einem die glatten Rohrenden umfassenden Pressfitting, dessen wulstförmig ausgebildete Enden je einen Dichtring aufnehmen, wobei mittels einer mit einer Betätigungsvorrichtung verbundenen auswechselbaren Haltevorrichtung mit gelenkig angeordneten Backen das wulstförmig ausgebildete Ende und gleichzeitig der benachbarte zylindrische Bereich des Pressfittings zusammen mit dem Rohr plastisch und der eingeschlossene Dichtring elastisch verformt werden, ist bekannt (s. Auszug aus dem Prospekt Mannesmann Pressfitting GmbH, Ausgabe 8/1994). Die Dichtfunktion der Verbindung wird dadurch erreicht, dass durch plastische Verformung des wulstartig ausgebildeten Endes der Dichtring elastisch verformt wird und über einen bestimmten Teil des Querschnittumfanges linienförmig an den ihn umgebenden Oberflächenbereichen des wulstartig ausgebildeten Endes des Pressfittings und des Rohres zur Anlage kommen. Zur Aufnahme der bei entsprechendem Innendruck auftretenden Längskräfte wird der dem wulstförmig ausgebildeten Ende benachbarte zylindrische Bereich des Pressfittings zusammen mit dem Rohr plastisch verformt. Bei der Verpressung werden sowohl das wulstförmig ausgebildete Ende als auch der benachbarte zylindrische Bereich mittels der Betätigungsvorrichtung gleichzeitig verformt. Auf Seite 13 und 14 des Prospektes wird darauf hingewiesen, dass für eine sichere Pressverbindung die richtige Einschieblänge für das Leitungsrohr von wesentlicher Bedeutung ist. Dabei wird unter "richtige Einschieblänge" verstanden, dass vor dem Verpressen das Leitungsrohr unter leichtem Drehen und gleichzeitigem Drücken in axialer Richtung bis zum durch die sickenartige Vertiefung des Pressfittings sich ergebenden Anschlag eingeschoben werden soll. Eine zuvor angebrachte Markierung auf dem Leitungsrohr dient dabei als Kontrolle. Auf einer Baustelle erfolgt eine Leitungsrohrveriegung aus Gründen einer praktischen Arbeitsfolge aber nicht immer Schritt für Schritt, d.h. abmessen, abschneiden, entgraten, anzeichnen, einschieben und verpressen, sondern es werden gleichzeitig mehrere zu verbindende Leitungsrohrabschnitte vermessen und eingeschoben und anschließend alle Verbindungsstellen verpresst. Bei dieser Arbeitsweise ist aber nicht auszuschließen, dass die Vermessung insbesondere bei engwinkligen Raumverhältnissen, nicht exakt war und das möglicherweise zu kurz abgeschnittene Leitungsrohr in einem oder sogar zwei Pressfittings nicht mehr voll eingeschoben werden kann oder nach Ausrichten der Leitung an einer Stelle das bereits eingeschobene Leitungsrohr aus dem Pressfitting ein Stück wieder herausgezogen wird. Da diese Rückverschiebung von außen nicht immer erkennbar ist, wenn beispielsweise nicht ordnungsgemäß die erforderliche Einschieblänge angezeichnet ist oder die Anzeichnung unvollständig war (nicht sichtbare Rückseite), erfolgt trotzdem die Verpressung. Je nach Grad der Rückverschiebung kann eine solche nicht ordnungsgemäße Verpressstelle infolge der Bewegung der Leitung später möglicherweise zu Undichtigkeiten, ggf. auch zum Lösen der Verbindung führen.

Eine andere Rohrverbindung ist aus der JP 55-88939 bekannt. Sie besteht aus einem Pressfitting, der mindestens ein im Querschnitt wulstartig einen Dichtring aufnehmenden Abschnitt und einen daran anschließenden der Einschubseite zugewandten ersten zylindrisch ausgebildeten Abschnitt aufweist. Auf der anderen Seite des Ringwulstes ist ein zweiter zylindrisch ausgebildeter Abschnitt vorgesehen, der im Innendurchmesser kleiner ist, so dass er einen Anschlag bildet. Der Übergang vom Ringwulst zum zweiten zylindrisch ausgebildeten Abschnitt erfolgt über eine Sprungstelle, die abgerundet in die beiden daran angrenzenden Bereiche übergehen. Dabei dient die Sprungstelle als Führung für das eingeschobene Leitungsrohr. Der glattendige Endbereich des zu verbindenden Leitungsrohres kommt nach dem Einschieben am Anschlag des zweiten zylindrisch ausgebildeten Abschnittes zur Anlage. Mittels eines den Pressfitting umfassenden zwei oder mehr Pressbacken aufweisenden Presswerkzeuges wird nach dem Schließen der Pressbacken eine unlösbare, dichte Rohrverbindung gebildet, wobei während des Verpressens die Pressbacken sowohl auf die Ringwulst einschl. des darin eingelegten Dichtringes, als auch auf den ersten zylindrisch ausgebildeten Abschnitt des Pressfittings einwirken.

Zur Lösung des geschilderten Problems ist vorgeschlagen worden, im Einschubbereich des Pressfittings für das Leitungsrohr außerhalb des Einwirkbereiches der Pressbacke ein weitgehend die axiale Rückbewegung des eingeschobenen Leitungsrohres verhindemdes Mittel anzuordnen, dessen lichte Weite im nichtbelasteten Zustand kleiner ist als der toleranzmäßig kleinste sich ergebende Außendurchmesser des eingeschobenen Leitungsrohres (DE 196 31 574 C1).

In Ergänzung zu dieser Lösung ist entsprechend der WO 99/49255 weiterhin vorgeschlagen worden, im Bereich des der Einschubseite abgewandten zylindrisch ausgebildeten Abschnittes ein nur eine begrenzt festgelegte axiale Rückbewegung des eingeschobenen Leitungsrohres erlaubendes Mittel anzuordnen, dessen lichte Weite im nichtbelasteten Zustand kleiner ist als der toleranzmäßig kleinste sich ergebende Außendurchmesser des eingeschobenen Leitungsrohres.

Nachteilig bei den bekannten Lösungen ist die Anordnung des die Rückbewegung des eingeschobenen Leitungsrohres verhindernden Mittels außerhalb des Einwirkbereiches der Pressbacke.

Aufgabe der Erfindung ist es, eine Rohrverbindung anzugeben, die den zuvor erläuterten Nachteil nicht aufweist.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüche.

Nach der Lehre der Erfindung ist das die Rückbewegung des eingeschobenen Leitungsrohres verhindernden Mittels im Einwirkbereich der Pressbacke angeordnet. Dies hat den Vorteil, dass durch die Verpressung des Mittels die axiale Sicherung verstärkt wird, weil durch den Pressvorgang das Mittel sich in das Leitungsrohr quasi eingräbt. Vorzugsweise ist das Mittel als ein aus einem elastischen Material hergestellter Ring ausgebildet. Das Mittel kann als Federelement aus einem metallischen Werkstoff oder aus Kunststoff oder aus einem Verbundwerkstoff Metall-Kunststoff hergestellt sein. Um die Rückbewegung weitgehend zu verhindern, ist der Ring oder die Nase des Ringes in Einschubrichtung geneigt. Wahlweise kann das Mittel in dem der Einschubseite zugewandten oder abgewandten zylindrisch ausgebildeten Abschnitt angeordnet sein.

Nach einem weiteren Merkmal der Erfindung wird vorgeschlagen, eine gewisse Rückbewegung zuzulassen, diese aber zunehmend zu erschweren, bis das Mittel an einem Anschlag zur Anlage kommt. Dazu ist der Innendurchmesser des zylindrisch ausgebildeten Abschnittes größer als der Innendurchmesser im Übergang zwischen Ringwulst und zylindrisch ausgebildetem Abschnitt.

Die gewünschte Erschwerung der Rückbewegung kann man dadurch erreichen, in dem man den Innendurchmesser in Richtung Einschubseite etwas verringert. Dadurch wird ein quasi Konus gebildet, der an seiner engsten Stelle den Anschlag bildet.

Alternativ zu den beiden zylindrisch ausgebildeten Abschnitten kann das Mittel auch an der Innenseite des Flankenbereiches des Ringwulstes oder alternativ im Dichtring angeordnet sein.

Weitere Merkmale, Vorteile und Einzelheiten der Erfindung ergeben sich aus der nachfolgenden Beschreibung von in einer Zeichnung dargestellten Ausführungsbeispielen. Es zeigen:
- Figur 1: einen hälftigen Teillängsschnitt durch eine erfindungsgemäß ausgebildete Rohrverbindung
- Figur 2: wie Figur 1, aber eine andere Ausführungsform
- Figur 3: wie Figur 1, aber eine weitere Ausführungsform
- Figur 4: wie Figur 2 aber eine weitere Ausführungsform
- Figur 5: eine Variante von Figur 1.

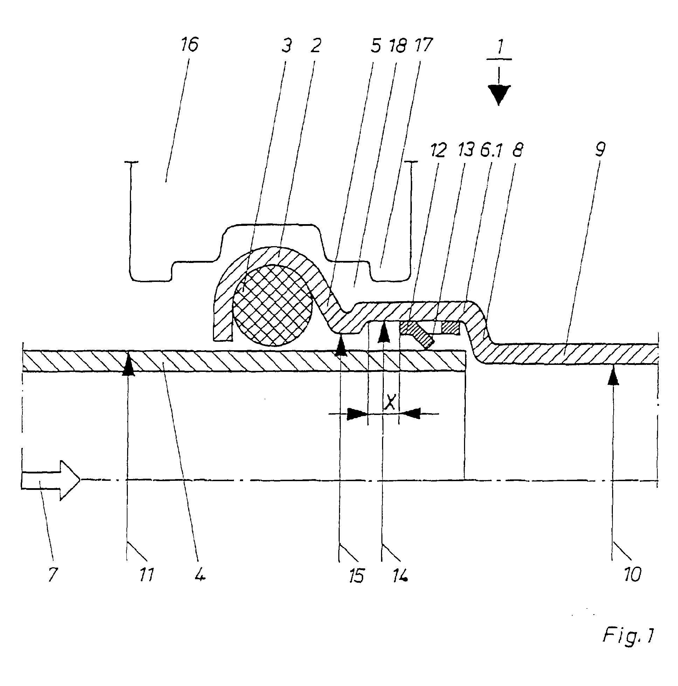

In Figur 1 ist in einem hälftigen Teillängsschnitt eine erfindungsgemäß ausgebildete Rohrverbindung dargestellt. Sie besteht aus einem Pressfitting 1 mit einer nach außen sich erstreckenden Ringwulst 2 und einem darin eingelegten Dichtring 3, sowie einem in den Pressfitting 1 eingeschobenen Leitungsrohr 4. In bekannter Weise geht die Ringwulst 2 über eine Flanke 5 in einen in Einschubrichtung 7 liegenden zylindrischen Abschnitt 6 über. Die Einschubrichtung 7 ist mit einem Pfeil gekennzeichnet. Der zylindrisch ausgebildete Abschnitt 6.1 bildet am Ende seiner Erstreckung eine Sprungstelle 8, die dann übergeht in einen weiteren zylindrisch ausgebildeten Abschnitt 9. Der Innendurchmesser 10 des letztgenannten zylindrischen Abschnittes 9 ist geringer als der toleranzmäßig kleinste äußere Durchmesser 11 des eingeschobenen Leitungsrohres 4. Im erstgenannten zylindrisch ausgebildeten Abschnitt 6.1 ist erfindungsgemäß ein die Rückbewegung des eingeschobenen Leitungsrohres 4 hemmendes Mittel angeordnet. In diesem Ausführungsbeispiel ist es ein aus einem metallischen Werkstoff hergestellter Ring 12, mit mehreren am Umfang angeordneten Nasen 13. Diese Nasen 13 sind in Einschubrichtung 7 geneigt. Um den Ring 12 anordnen zu können, weist der zylindrisch ausgebildete Abschnitt 6.1 einen Innendurchmesser 14 auf, der größer ist als der Innendurchmesser 15 im Übergang Ringwulst 2 - zylindrischer Abschnitt 6.1. Zur Verständlichmachung der erfindungsgemäßen Anordnung des Ringes 12 ist der Teilbereich einer Pressbacke 16 mit eingezeichnet worden. Daraus wird ersichtlich, dass der Ring 12 im Einwirkbereich des Presssteges 17 angeordnet ist. Dies bedeutet, dass bei der Verpressung der Ring 12 mit verformt wird und die Nasen 13 in das darunterliegende Leitungsrohr 4 eingedrückt werden. Damit wird die axiale Sicherung gegen ein Herausdrücken des eingeschobenen Leitungsrohres 4 verstärkt.

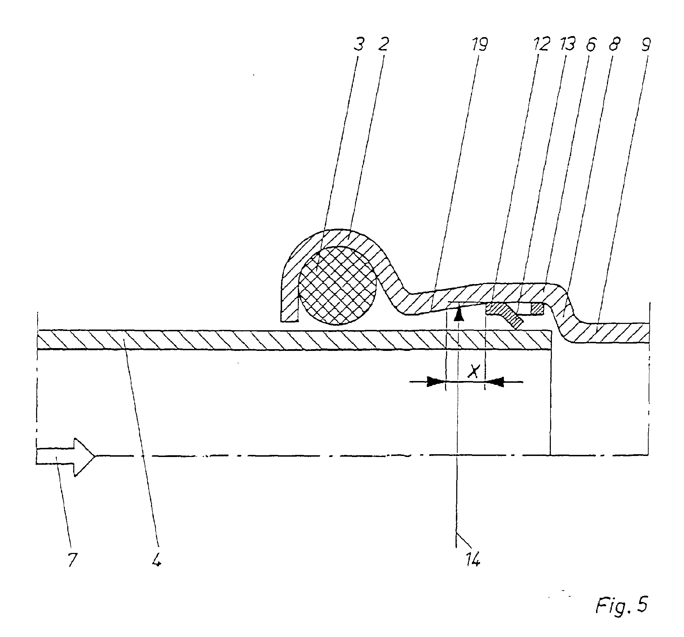

In diesem Ausführungsbeispiel ist die Möglichkeit einer bestimmten festgelegten Rückbewegung des eingeschobenen Leitungsrohres 4 dargestellt. Der einen größeren Innendurchmesser 14 aufweisende zylindrische Abschnitt 6.1 ist länger als die Breite des Ringes 12. Mit dem Kennzeichen x ist eine Strecke markiert, entlang derer der Ring 12 zusammen mit dem Leitungsrohr 4 sich maximal rückbewegen kann. Eine der Möglichkeiten, die Rückbewegung zu begrenzen ist, innenseitig einen Absatz 18 zu bilden. Eine andere Möglichkeit ist in Figur 5 dargestellt. Bei dieser Ausführungsvariante verringert sich der Innendurchmesser 14 des zylindrisch ausgebildeten Abschnittes 6.1 entgegen der Einschubrichtung 7 und bildet einen Konus 19. Die engste Stelle des Konus 19 bildet dann den Anschlag für die Rückbewegung des Ringes 12 zusammen mit dem eingeschobenen Leitungsrohr 4.

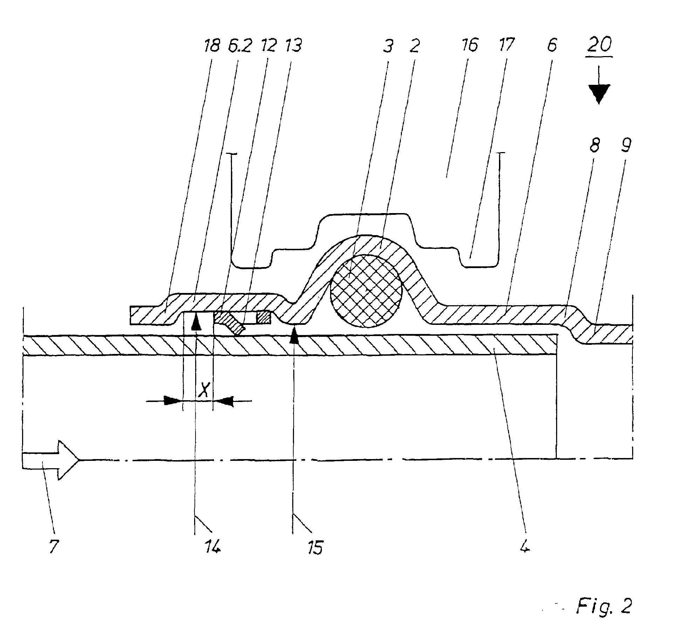

Figur 2 zeigt eine zweite Ausführungsform der erfindungsgemäß ausgebildeten Rohrverbindung, wobei für gleiche Teile gleiche Bezugszeichen verwendet worden sind. Im Unterschied zur Ausführungsform gemäß Figur 1 ist auf der der Einschubrichtung 7 zugewandten Seite auch ein zylindrisch ausgebildeter Abschnitt 6.2 angeordnet. Er ist vergleichbar wie der Abschnitt 6.1 in Figur 1 ausgebildet und ein die Rückbewegung des eingeschobenen Leitungsrohres 4 verhindernder Ring 12 ist in ihm angeordnet. Die Rückbewegung ist durch eine Strecke x markiert. Ein Absatz 18 bildet einen Anschlag für eine weitere Rückbewegung. Auch dieser Bereich kann vergleichbar wie in Figur 5 dargestellt, ausgebildet sein, d.h. mit einem Konus, dessen engste Stelle den Anschlag bildet.

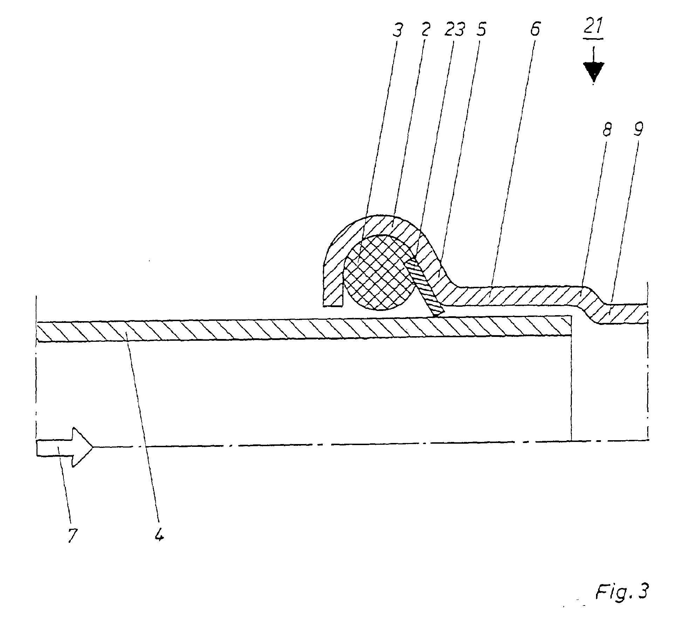

In Figur 3 ist eine weitere Ausführungsform dargestellt, wobei ebenfalls für gleiche Teile gleiche Bezugszeichen verwendet worden sind. Bei dieser Ausführungsform ist das die Rückbewegung verhindernde Mittel in Form eines Kegelringes 23 auf der Innenseite der Flanke 5 des Pressfittings 21 angeordnet. Die Flanke 5 bildet den Übergang von der Ringwulst 2 zum zylindrisch ausgebildeten Abschnitt 6. Der Kegelring 23 ist in Einschubrichtung 7 geneigt. Ergänzend wird darauf hingewiesen, dass Figur 3 vergleichbar wie Figur 2 mit zwei zylindrisch ausgebildeten Abschnitten 6, rechts und links neben der Ringwulst 2 ausgebildet sein kann.

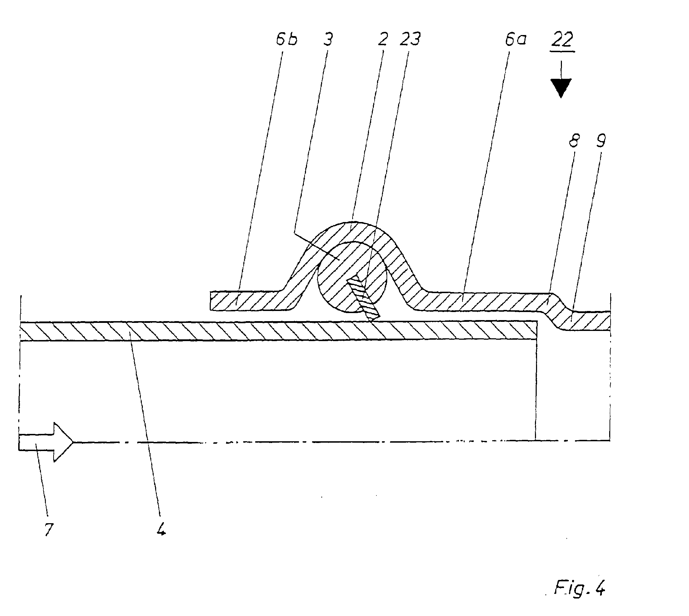

Eine weitere Ausführungsform zeigt Figur 4. Bei dieser Ausführungsform ist das die Rückbewegung des eingeschobenen Leitungsrohres 4 verhindernde Mittel ebenfalls in Form eines Kegelringes 23 im Dichtring 3 angeordnet. Ergänzend sei hier ebenfalls darauf hingewiesen, dass diese Ausführungsform ausgebildet sein kann wie Figur 3 bei gleicher Anordnung des Kegelringes 22 im Dichtring 3.

| Bezugszeichenliste | |
|---|---|
| Nr. | Bezeichnung |
| 1 | Pressfitting |
| 2 | Ringwulst |
| 3 | Dichtring |
| 4 | Leitungsrohr |
| 5 | Flanke Ringwulst |
| 6, 6a, 6b | zylindrisch ausgebildeter Abschnitt |
| 6.1, 6.2 | zylindrisch ausgebildeter Abschnitt mit größerem Innendurchmesser |
| 7 | Einschubrichtung |
| 8 | Sprungstelle |
| 9 | zylindrisch ausgebildeter Abschnitt |
| 10 | Innendurchmesser von 9 |
| 11 | äußerer Durchmesser Leitungsrohr |
| 12 | Ring |
| 13 | Nase |
| 14 | Innendurchmesser von 6.1, 6.2 |
| 15 | Innendurchmesser Übergang |
| 16 | Pressbacke |
| 17 | Presssteg |
| 18 | Absatz |
| 19 | Konus |
| 20 | Pressfitting (andere Ausführungsform) |
| 21 | Pressfitting (andere Ausführungsform) |
| 22 | Pressfitting (andere Ausführungsform) |
| 23 | Kegelring |

## Patentansprüche

1. Rohrverbindung, bestehend aus einem Pressfitting, der mindestens einen im Querschnitt wulstartig ausgebildeten, einen Dichtring aufnehmenden Abschnitt und einen daran anschließenden, der Einschubseite zugewandten und/oder der Einschubseite abgewandten, zylindrisch ausgebildeten Abschnitt aufweist, wobei der der Einschubseite abgewandte zylindrisch ausgebildete Abschnitt einen Anschlag bildend in einen daran anschließenden zylindrisch ausgebildeten Abschnitt übergeht, dessen Innendurchmesser kleiner ist als die anderen zylindrisch ausgebildeten Abschnitte und einem Leitungsrohr, dessen glatt ausgebildeter Endbereich nach dem Einschub in den Pressfitting am inneren Anschlag des Pressfrttings zur Anlage kommt und mittels eines den Pressfitting umfassenden mindestens zwei Pressbacken aufweisenden Presswerkzeuges nach dem Schließen eine unlösbare dichte Rohrverbindung gebildet wird, wobei während des Verpressens die Pressbacken sowohl auf die Ringwulst einschl. des darin eingelegten Dichtringes als auch auf den der Einschubseite zugewandten und/oder abgewandten zylindrisch ausgebildeten Abschnitt des Pressfittings einwirken, wobei im Einschubbereich des Pressfittings das Leitungsrohr ein weitgehend die axiale Rückbewegung des eingeschobenen Leitungsrohres verhinderndes Mittel angeordnet ist, dessen lichte Weite im nichtbelasteten Zustand kleiner ist als der toleranzmäßig kleinste sich ergebende Druchmesser des eingeschobenen Leitungsrohres,
**dadurch gekennzeichnet,**
**dass** das Mittel im Einwirkbereich der Pressbacke (16) angeordnet ist.

2. Rohrverbindung nach Anspruch 1,
**dadurch gekennzeichnet,**
**dass** das Mittel ein aus einem elastischen Material bestehender Ring (12) ist.

3. Rohrverbindung nach Anspruch 2,
**dadurch gekennzeichnet,**
**dass** der Ring (12) eine nach innen sich erstreckende Nase (13) aufweist.

4. Rohrverbindung nach Anspruch 2,
**dadurch gekennzeichnet,**
**dass** der Ring (12) in Einschubrichtung des Leitungsrohres (4) geneigt ist.

5. Rohrverbindung nach Anspruch 3,
**dadurch gekennzeichnet,**
**dass** die Nase (13) in Einschubrichtung des Leitungsrohres (4) geneigt ist.

6. Rohrverbindung nach Anspruch 1,
**dadurch gekennzeichnet,**
**dass** das Mittel ein ringförmiges Federelement aus einem metallischen Werkstoff ist.

7. Rohrverbindung nach Anspruch 1,
**dadurch gekennzeichnet,**
**dass** das Mittel ein ringförmiges Federelement aus Kunststoff ist.

8. Rohrverbindung nach Anspruch 1,
**dadurch gekennzeichnet,**
**dass** das Mittel ein ringförmiges Federelement aus einem Verbundwerkstoff (Metall/Kunststoff) ist.

9. Rohrverbindung nach einem der Ansprüche 1 - 8,
**dadurch gekennzeichnet,**
**dass** das Mittel in dem der Einschubseite abgewandten zylindrisch ausgebildeten Abschnitt (6.1) angeordnet ist.

10. Rohrverbindung nach einem der Ansprüche 1 - 8,
**dadurch gekennzeichnet,**
**dass** das Mittel in dem der Einschubseite zugewandten zylindrisch ausgebildeten Abschnitt (6.2) angeordnet ist.

11. Rohrverbindung nach Anspruch 9 oder 10,
**dadurch gekennzeichnet,**
**dass** der zylindrisch ausgebildete Abschnitt (6.1, 6.2) so gestaltet ist, dass eine begrenzt festgelegte axiale Rückbewegung des eingeschobenen Leitungsrohres (4) möglich ist.

12. Rohrverbindung nach Anspruch 11,
**dadurch gekennzeichnet,**
**dass** der zylindrisch ausgebildete Abschnitt (6.1, 6.2) einen Innendurchmesser (14) aufweist, der größer ist als der Innendurchmesser (15) im Übergangsbereich zwischen Ringwulst (2) und zylindrisch ausgebildetem Abschnitt (6.1, 6.2) und dessen Länge größer ist als die Breite des Mittels.

13. Rohrverbindung nach Anspruch 11 und 12,
**dadurch gekennzeichnet,**
**dass** der Innendurchmesser in Richtung Einschubseite sich etwas verringert.

14. Rohrverbindung nach einem der Ansprüche 1 - 8,
**dadurch gekennzeichnet,**
**dass** das Mittel auf der Innenseite des Flankenbereiches (5) des Ringwulstes (2) angeordnet ist.

15. Rohrverbindung nach einem der Ansprüche 1 - 8,
**dadurch gekennzeichnet,**
**dass** das Mittel im Dichtring (3) angeordnet ist.
